# EUROPEAN PATENT APPLICATION

(11) **EP 4 654 366 A1**
(43) Date of publication of application: **26.11.2025**
(21) Application number: 24863184.8
(22) Date of filing: 04.09.2024
(51) Int. Cl.: H01M 50/383, H01M 50/30, H01M 50/289

(54) **BATTERY PACK**

(30) Priority: 05.09.2023 KR 20230117979
(71) Applicant: LG Energy Solution, Ltd., Seoul 07335 (KR)
(72) Inventor: SON, Hong Se, Daejeon 34122 (KR); YOON, Young Il, Daejeon 34122 (KR); KO, Yoon Oh, Daejeon 34122 (KR)
(74) Representative: Plasseraud IP
(86) International application number: PCT/KR2024/013318
(87) International publication number: WO 2025/053604

(57) **Abstract**

Disclosed herein relates to a battery pack accommodating a plurality of cell assemblies, including: a pack case in which a cell assembly is seated; an upper case coupled to the pack case to cover an upper part of a cell assembly seated inside the pack case; and at least one spark prevention member comprising circular mesh holes and provided at the lower end of the upper case, wherein the pack case includes at least one discharge hole on a side part communicating with the interior space, the spark prevention member is provided at a location corresponding to the discharge hole of the pack case, and the mesh holes have an average diameter of 0.1 mm to 0.43 mm.

## Description

### [Technical Field]

The present disclosure relates to a battery pack, characterized in that the battery pack includes a pack case including at least one discharge hole and an upper case having a mesh structured spark prevention member corresponding to the discharge hole.

This application claims the benefit of priority from Korean Patent Application No. 10-2023-0117979, filed on Sep. 5, 2023, the disclosure of which is incorporated herein by reference.

### [Background]

A lithium secondary battery is representative in the form of a cell, which fundamentally consists of an electrode assembly stacked alternately with electrodes and separators, an electrode lead connected to the electrodes, and a case enclosing and sealing the electrode assembly so that the electrode lead is drawn outwardly. In this case, depending on the shape of the electrode assembly and the shape of the case, it can be divided into a cylindrical cell, a prismatic cell, a pouch-type cell, and the like.

The output of the single cell is not large, so when applying it to a vehicle, a plurality of cells is connected to get the desired output.

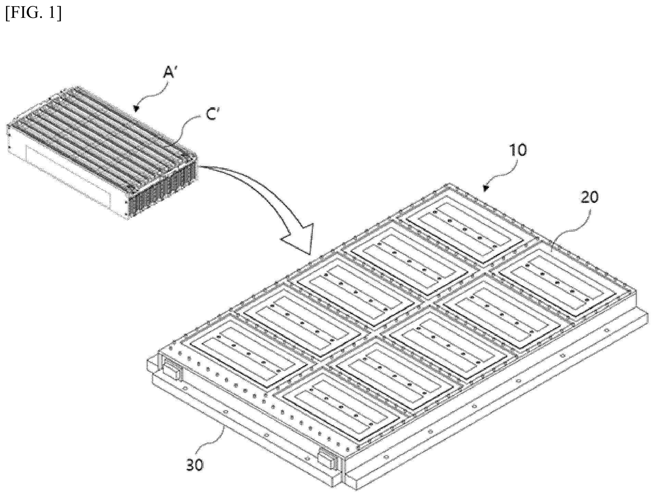

FIG. 1 illustrates a conventional battery pack 10 having a cell assembly A' comprising a plurality of cells C' stacked and coupled together, and wherein the cell assembly A' is accommodated.

In general, the battery pack 10 includes a pack case 30 in which a cell assembly A' is seated, as shown in FIG. 1, and an upper case 20 coupled to the pack case 30 to cover the upper part of the seated cell assembly A'.

An electric vehicle may be mounted with the battery pack 10 shown in FIG. 1, and an electric vehicle mounted with the battery pack 10 may obtain a large power output from a plurality of cell assemblies A' included in the one battery pack 10.

As described above, the battery pack 10, which can obtain a large power output, is at risk of explosion, fire, etc. due to heat generation. Therefore, securing safety in addition to energy efficiency is one of the important tasks of the battery pack 10 applied to electric vehicles and the like. If such an abnormal phenomenon is not responded to appropriately at an early stage, the internal temperature of the battery pack 10 may increase rapidly due to heat generation, and the increase in temperature may cause the cell C' to experience thermal runaway.

In order to increase the safety of various electrical appliances, including electric vehicles, countries are requiring manufacturers of secondary batteries to meet several safety requirements. For example, China has proposed GB 38031-2020 remedies, which requires the introduction of a system that can control thermal runaway of cell C' within 5 minutes.

China, as well as many other countries, is requiring battery pack 10 to be structured to effectively control anomalies in the accommodated cells C' before they develop into explosions and fires in the battery pack 10.

Meanwhile, if the thermal runaway process of the cell assembly A' is examined, high-temperature gas generated by vaporization of the electrolyte is released inside the cell assembly A', and spark particles may be generated due to a short circuit of the electrode, etc. The conventional battery pack 10 is provided with a gas discharge path on the side through which the gas can be discharged to prevent the internal pressure from rising rapidly due to the high-temperature gas as described above. However, there is a risk of an explosion if the spark particles generated escape through the gas discharge path to the oxygen-dense environment outside.

Therefore, there is a need to develop a battery pack 10 with a structure that can selectively discharge only gas while suppressing the discharge of spark particles when a thermal runaway situation of cell C' occurs inside.

### [Summary]

### [Technical Problem]

Accordingly, the present disclosure was conceived to solve the above problems and aims to provide a battery pack having a structure capable of selectively releasing only high-temperature gases in a thermal runaway situation.

Other objects and advantages of the present disclosure will be understood from the following description, and will become more apparent from the embodiments of the present disclosure. It will also be readily apparent that the objects and advantages of the present disclosure may be realized by the means and combinations thereof disclosed in the patent claims.

### [Technical Solution]

The present disclosure provides a battery pack accommodating a plurality of cell assemblies.

The battery pack includes: a pack case in which a cell assembly is seated; an upper case coupled to the pack case to cover an upper part of a cell assembly seated inside the pack case; and at least one spark prevention member comprising circular mesh holes and provided at the lower end of the upper case, wherein the pack case includes at least one discharge hole on a side part communicating with the interior space, the spark prevention member is provided at a location corresponding to the discharge hole of the pack case, and the mesh holes have an average diameter of 0.1 mm to 0.43 mm.

The spark prevention member may have a mesh structure.

The mesh holes may have an average diameter of 0.35 mm to 0.43 mm.

The spark prevention member may be erected perpendicular to the upper case such that the mesh holes communicate with the discharge holes of the pack case.

The pack cases may include: a base plate that supports the lower part of the cell assembly; a center beam crossing a center part of the base plate and coupled to the base plate so as to compartmentalize the interior space of the pack case into two; and a side beam coupled to a rim of the base plate to support a side part of the cell assembly.

The pack case includes two discharge holes, wherein each of the discharge holes may be formed in the side beam to communicate with a respective pack case interior space compartmentalized by the center beam.

The spark prevention member may be located on at least one of the inside and outside of the side beam.

The one discharge hole is correspondingly provided with a pair of spark prevention members, wherein
a pair of the paired spark prevention members may be spaced apart at a predetermined distance and may be provided at the lower end of the upper case to face each other.

One of the pair of spark prevention members may be located on the inside of the side beam and the other may be located on the outside of the side beam.

The side beam includes an insertion groove open to the upper part for insertion of the spark prevention member, the insertion groove is formed corresponding to a position in which the discharge hole is formed to intersect the discharge hole, wherein the upper case may be coupled to the pack case by allowing the spark prevention member to be inserted into the insertion groove.

The spark prevention member may be provided at the lower end of the upper case at a position spaced apart horizontally at a predetermined distance from the side beam.

The spark prevention member may be provided to be spaced apart at 0.1 mm to 1 mm from the side beam.

The spark prevention member may include an electrically insulating material.

The spark prevention member may include a flame-resistant material.

The spark prevention member may have an area greater than the area of the discharge hole.

### [Advantageous Effects]

According to the present disclosure, explosions and fires in battery packs can be prevented in advance.

### [Brief Description of the Drawings]

FIG. 1 illustrates a conventional battery pack and a cell assembly accommodated in the battery pack.
FIG. 2 is a front perspective view of a battery pack according to a first embodiment of the present disclosure.
FIG. 3 is a rear perspective view of the battery pack of FIG. 2.
FIG. 4 is a front view of a spark prevention member.
FIG. 5 is a bottom perspective view of a spark prevention member.
FIG. 6 illustrates the process of the upper case and pack case being coupled together.
FIG. 7 is a cross-sectional view of the battery pack of FIG. 6, showing a pack case where a discharge hole is located and an upper case where a spark prevention member is located.
FIG. 8 illustrates the gases generated inside the battery pack being discharged to the outside through the discharge hole.
FIG. 9 illustrates the movement of spark particles generated inside the battery pack.
FIG. 10 illustrates the process of coupling an upper case and a pack case included in a battery pack according to a second embodiment of the present disclosure.
FIG. 11 is a cross-sectional view of the battery pack of FIG. 10, showing a pack case where a discharge hole is located and an upper case where a spark prevention member is located.
FIG. 12 illustrates the process of coupling an upper case and a pack case included in a battery pack according to a third embodiment of the present disclosure.
FIG. 13 is a cross-sectional view of the battery pack of FIG. 12, showing a pack case where a discharge hole is located and an upper case where a spark prevention member is located.
FIG. 14 illustrates the process of coupling an upper case and a pack case included in a battery pack according to a fourth embodiment of the present disclosure.
FIG. 15 is a cross-sectional view of the battery pack of FIG. 14, showing a pack case where a discharge hole is located and an upper case where a spark prevention member is located.
FIG. 16 illustrates the cell ignition equipment prepared for the experiment.
FIG. 17 is a cross-sectional view of the cell ignition equipment of FIG. 16.
FIG. 18 illustrates the experimental results of Example 1.
FIG. 19 illustrates the experimental results of Comparative Example 1.
FIG. 20 illustrates the experimental results of Comparative Example 2.

### [Best Mode for Carrying out the Invention]

Hereinafter, preferred embodiments of the present disclosure will be described in detail with reference to the accompanying drawings. Prior to this, it should be noted that the terms or words used in this specification and the claims are not to be construed in their ordinary or dictionary sense, but rather in a sense and concept consistent with the technical idea of the disclosure, based on the principle that the inventor may properly define the concept of a term to best describe his/her disclosure.

Accordingly, it is to be understood that the embodiments described herein and the configurations illustrated in the drawings are only the most preferred embodiments of the disclosure and are not intended to be exhaustive of the technical ideas of the disclosure, and that there may be various equivalents and modifications that may be substituted for them at the time of filing.

Furthermore, in describing the disclosure, specific descriptions of related known configurations or features are omitted where it is determined that such detailed descriptions would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a battery pack having a structure accommodating a plurality of cell assemblies and is capable of selectively releasing only high-temperature gases generated in a thermal runaway situation of the cells.

The battery pack of the present disclosure includes a pack case including at least one discharge hole and an upper case having a mesh structured spark prevention member corresponding to the discharge hole.

In particular, the battery pack of the present disclosure is characterized by optimally limited mesh hole sizes in the spark prevention member.

The cell assembly includes a plurality of cells stacked in one direction.

The cell includes an electrode assembly having alternating stacks of electrodes and separators, electrode leads in communication with the electrodes, a cell case enclosing the electrode assembly to seal the electrode assembly, and an electrolyte filled within the cell case with the electrode assembly.

The cells may include pouch-type cells, cylindrical cells, and prismatic cells, depending on the shape of the cell case, and are not particularly limited by the present disclosure.

The cell assembly may further include a frame enclosing at least one side of the cell stack to protect the cell stack from external impact or the like.

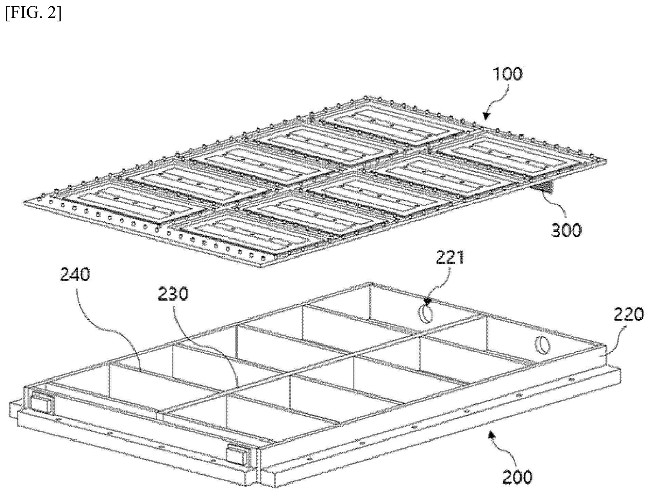

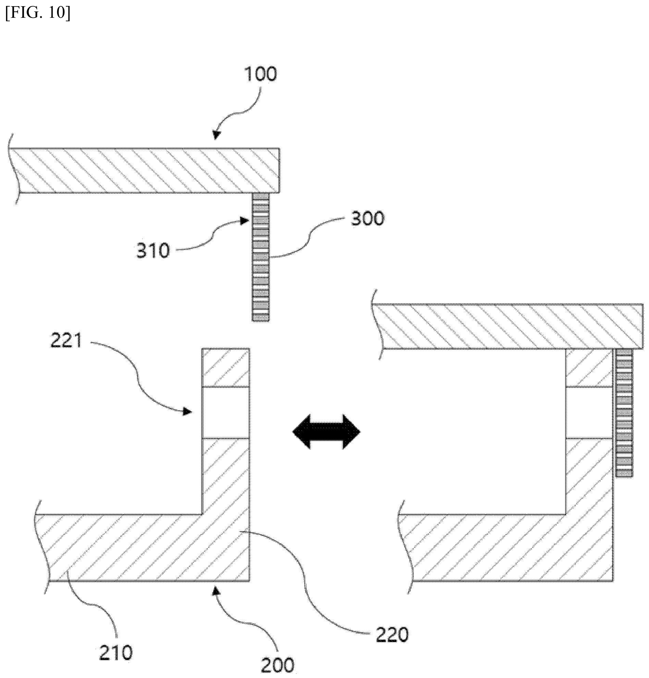

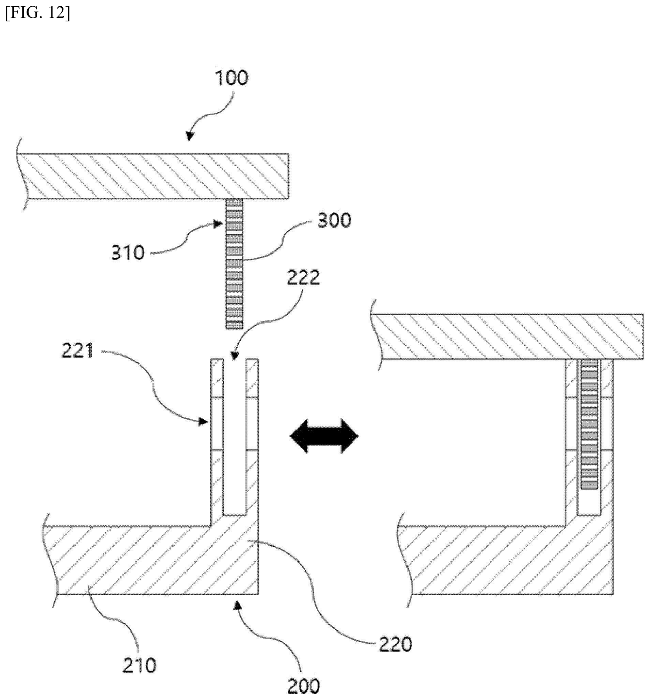

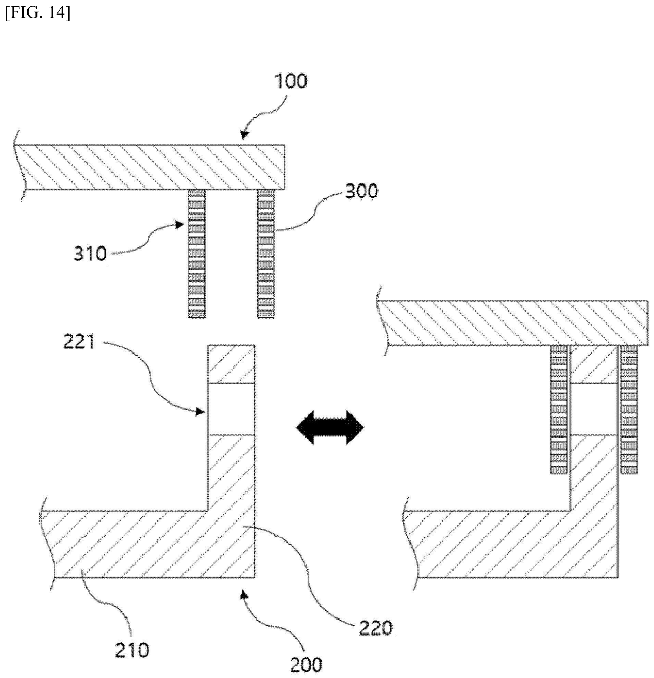

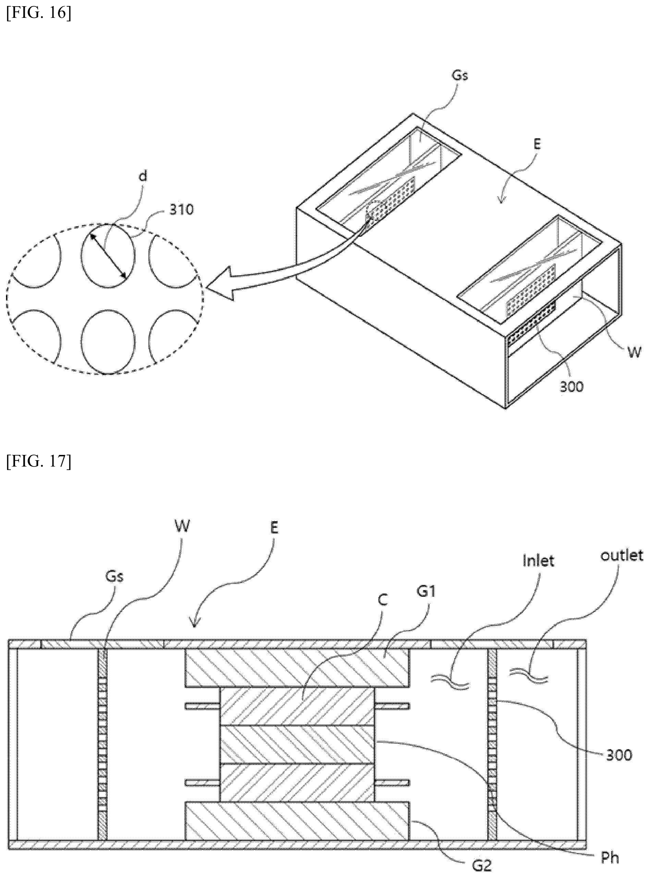

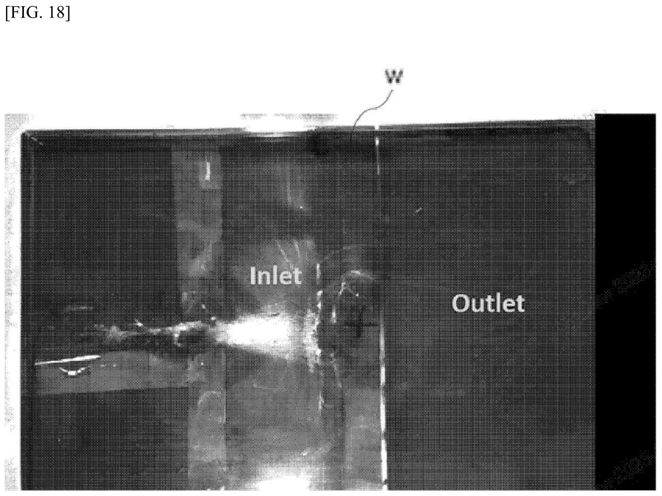

FIGS. 2 through 9 illustrate a battery pack according to a first embodiment of the present disclosure, FIGS. 10 through 11 illustrate a battery pack according to a second embodiment of the present disclosure, FIGS. 12 through 13 illustrate a battery pack according to a third embodiment of the present disclosure, FIGS. 14 through 15 illustrate a battery pack according to a fourth embodiment of the present disclosure, FIGS. 16 and 17 illustrate cell ignition equipment to be used in experiments of the present disclosure, and FIGS. 18 through 20 illustrate experimental results of the Examples and Comparative Examples.

Hereinafter, specific embodiments of the battery pack of the present disclosure will be described in detail with reference to the accompanying drawings. For reference, relative positioning designations such as front to back or up and down as used in the following description are intended to aid in understanding the disclosure and refer to the orientation shown in the drawings unless otherwise defined.

### (First embodiment)

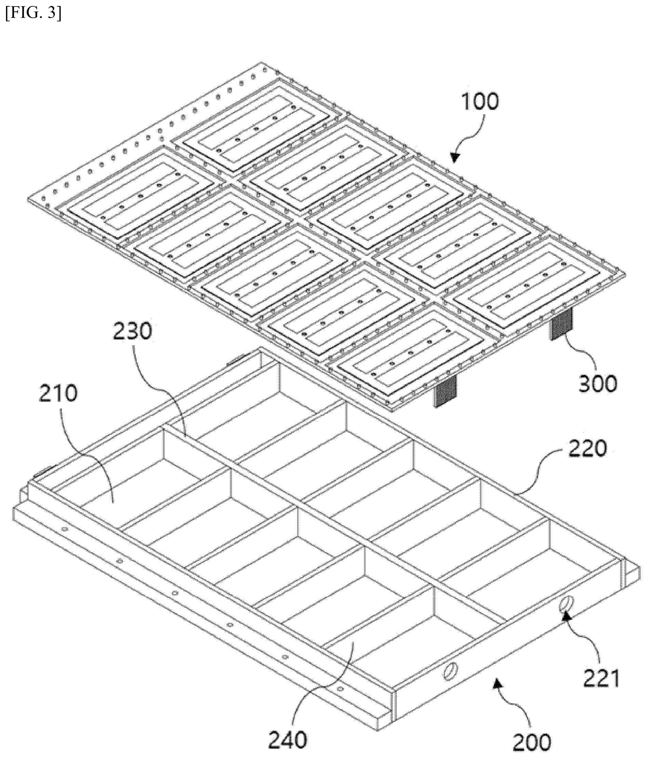

FIG. 2 is a front perspective view of a battery pack according to a first embodiment of the present disclosure, and FIG. 3 is a rear perspective view of the battery pack of FIG. 2.

A battery pack of the present disclosure includes a pack case 200 in which a cell assembly A is seated, and an upper case 100 coupled to the pack case 200 to cover an upper part of the cell assembly A seated within the pack case 200.

The pack case 200 more particularly includes a base plate 210 for supporting a lower part of the cell assembly A, a side beam 220 coupled to a rim of the base plate 210 for supporting a side part of the cell assembly A, and a center beam 230 crossing the center part of the base plate 210 and coupled to the base plate 210 so as to compartmentalize the interior space of the pack case 200 into two.

The pack case 200 may further include a cross beam 240, which is coupled at both ends to the center beam 230 and side beam 220, respectively.

The cross beam 240 serves to further compartmentalize the interior space of the pack case 200 compartmentalized by the center beam 230 into cell assembly A units. However, the cross beams 240 may be excluded if desired.

The interior space of the pack case 200 may be compartmentalized by the center beam 230 and cross beam 240 and the like, but substantially each of the compartmentalized spaces may be interconnected. For example, in the event of gas generation from the cell assembly A stored in any of the above compartmentalized spaces, the internal pressure of the pack case 200 interior space may be equally elevated in any of the areas.

The pack case 200 may include at least one discharge hole 221 on a side part communicating with the interior space. That is, the pack case 200 may be formed with a discharge hole 221 on one side to allow the gas (g) generated inside to be discharged to the outside.

Specifically, the discharge holes 221 may be formed in the side beams 220 as shown in FIG. 2. Thus, when one of the cell assemblies A undergoes thermal runaway and generates high-temperature gas (g), the gas (g) may travel to the discharge hole 221 and be discharged to the outside.

The pack case 200 of the present disclosure includes at least two discharge holes 221, each of the discharge holes 221 being formed in the side beams 220 to communicate with the respective pack case 200 interior space compartmentalized by the center beam 230.

The discharge holes 221 may be formed on either a front and a rear surface of the pack case 200.

Referring to FIG. 2 above, two discharge holes 221 are formed on each side relative to the coupling site of the center beam 230 and the side beam 220.

The upper case 100 is coupled to the upper end of the side beam 220 such that the interior space of the pack case 200 is sealed from the outside.

The battery pack of the present disclosure is characterized in that it further includes a spark prevention member 300 provided at the lower end of the upper case 100, which selectively allows only gas (g) to pass through.

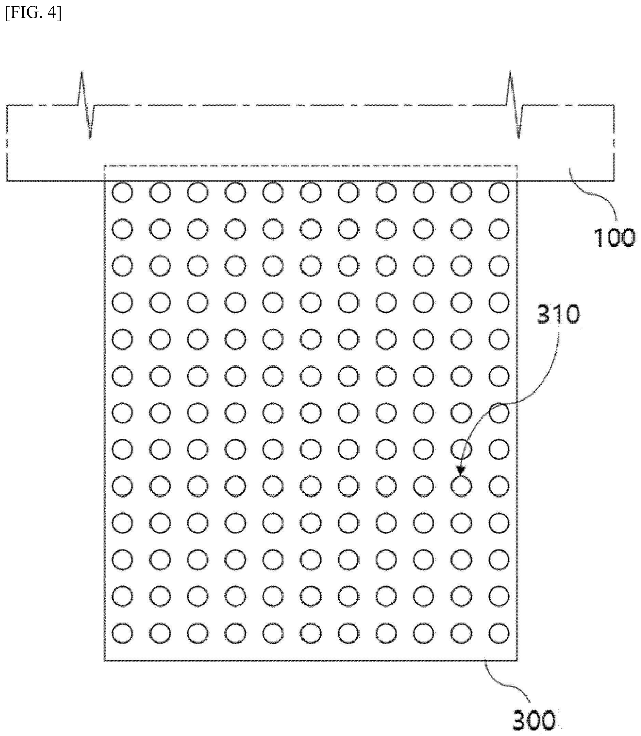

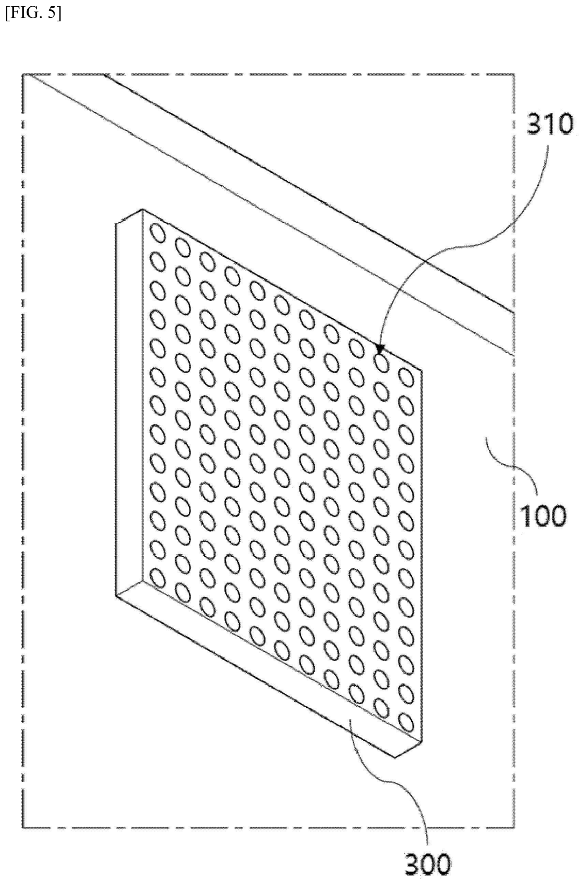

FIG. 4 is a front view of the spark prevention member 300, and FIG. 5 is a bottom perspective view of the spark prevention member 300.

The spark prevention member 300 has a mesh structure and includes a plurality of mesh holes 310, as shown in FIG. 4.

The mesh holes 310 of the spark prevention member 300 allow gas (g) to pass through and impede the movement of spark particles (p) and the like.

The spark prevention member 300 preferably includes a flame-resistant material so that it is not damaged by high-temperature gases (g) or the like. It also preferably includes an electrically insulating material so that electricity can be prevented from flowing through it.

The shape of the mesh holes 310 may be circular as shown, but is not limited thereto and may be polygonal.

The spark prevention member 300 is coupled at its upper end to the lower end of the upper case 100. More specifically, the spark prevention member 300 is erected and provided so as to be perpendicular to the upper case 100, as shown in FIG. 5. Thus, the gas (g) can travel in a horizontal direction and pass through the mesh holes 310 of the spark prevention member 300.

The battery pack of the present disclosure is characterized in that the spark prevention member 300 is provided in a position corresponding to the discharge hole 221 of the pack case 200.

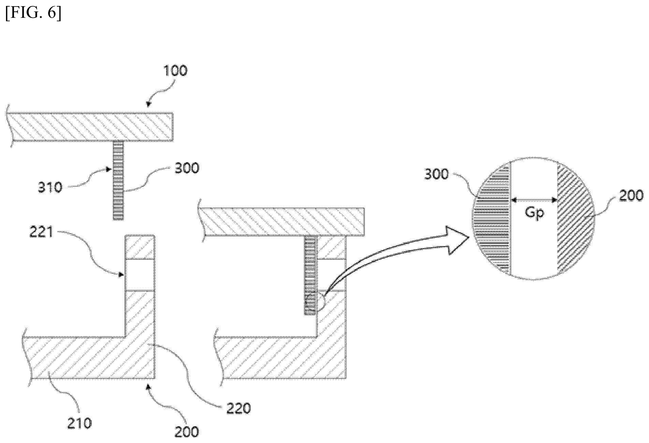

FIG. 6 illustrates the process of the upper case 100 and pack case 200 being coupled together.

Referring to FIG. 6, discharge holes 221 are formed in the side beams 220, and a spark prevention member 300 is provided at the lower end of the upper case 100 at a position corresponding to each of the discharge holes 221.

The spark prevention member 300 included in the battery pack according to the first embodiment is provided at the lower end of the upper case 100 so as to be located on the inside of the side beam 220, as shown in FIG. 6.

The spark prevention member 300, which is coupled to stand vertically at the lower end of the upper case 100, is shaped to cover the discharge hole 221 when the upper case 100 is coupled to the pack case 200. That is, the spark prevention member 300 is shaped such that when the upper case 100 and pack case 200 are coupled to each other, the mesh hole 310 communicates with the discharge hole 221 of the pack case 200.

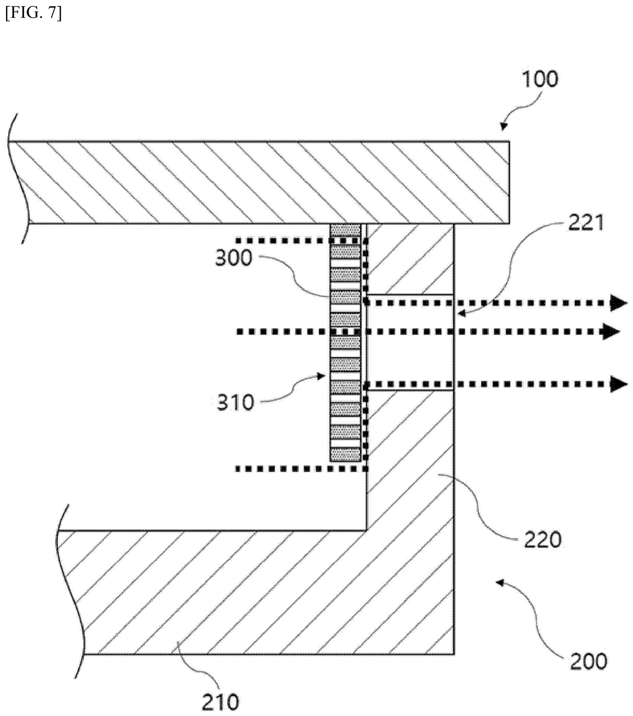

FIG. 7 is a cross-sectional view of the battery pack of FIG. 6, showing a pack case 200 where a discharge hole 221 is located and an upper case 100 where a spark prevention member 300 is located.

Preferably, the spark prevention member 300 has an area larger than the area of the discharge hole 221 so as to intercept spark particles (p) that are ejected toward the discharge hole 221.

The spark prevention member 300 is positioned to cover and close the entirety of the discharge hole 221 as shown in FIG. 7.

However, the spark prevention member 300 is provided at a position spaced apart at a predetermined distance so as not to contact the surface of the side beam 220. That is, the spark prevention member 300 is provided at the lower end of the upper case 100 at a position spaced apart at a predetermined distance from the side beam 220 in a horizontal direction.

Thus, a gap Gp may be formed between the spark prevention member 300 and the side beam 220.

The gap Gp serves as an auxiliary traveling pathway for the gas (g) discharged through the mesh hole 310 to go directly to the discharge hole 221 without passing through the spark prevention member 300.

In the event that a large amount of gas (g) is generated inside the battery pack, it may not be possible to quickly discharge the gas (g) through the mesh holes 310 of the spark prevention member 300. Therefore, in addition to the mesh holes 310, an additional pathway should be provided for the movement of the gas g inside to the discharge hole 221, wherein the gap Gp between the spark prevention member 300 and the side beam 220 serves as an additional movement pathway.

The spacing of the gap Gp may vary depending on the expected amount of gas (g) and the pressure inside the battery pack.

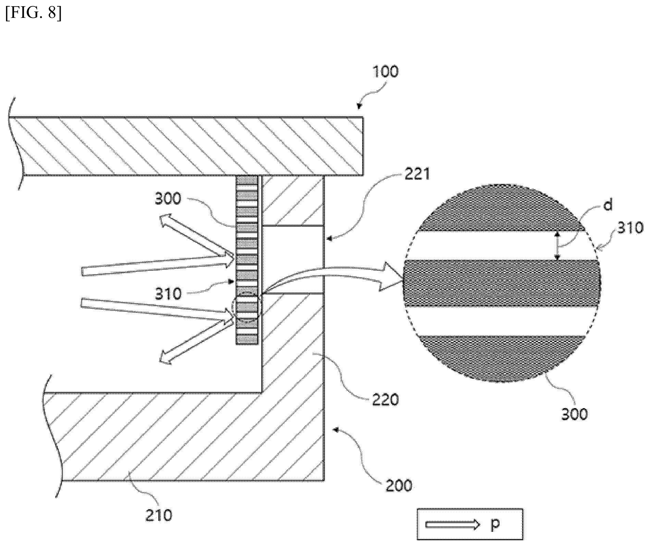

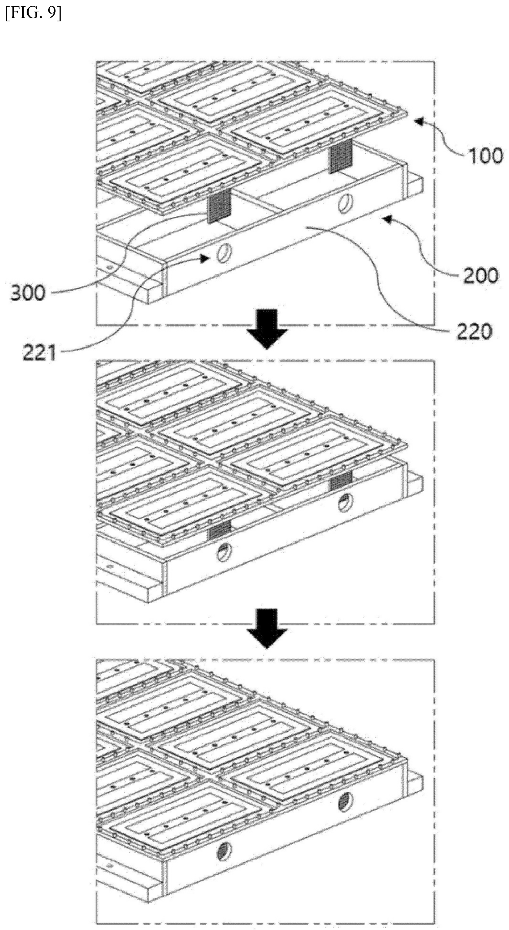

FIG. 8 illustrates gas (g) generated inside the battery pack being discharged to the outside through discharge hole 221, and FIG. 9 illustrates the migration of spark particles (p) generated inside the battery pack.

According to FIG. 8, the gas (g) reaches the discharge hole 221 through the mesh holes 310 of the spark prevention member 300, and also reaches the discharge hole 221 through the gap Gp between the spark prevention member 300 and the side beam 220.

According to FIG. 9, the spark particles (p) do not exit through the mesh holes 310 of the spark prevention member 300 and are blocked or deflected.

The size of the material that can pass through is limited by the size of the mesh holes 310, which have an average diameter d of 0.1 mm to 0.43 mm. In this case, if the average diameter (d) of the mesh holes 310 is less than 0.1 mm, the discharge of the gas (g) is not as smooth as desired, and there is a risk of an explosion due to an increase in the internal pressure of the battery pack. Furthermore, if the average diameter (d) of the mesh holes 310 is greater than 0.43 mm, there is a risk of spark particles (p) passing through.

More preferably, the mesh holes 310 have an average diameter (d) of 0.35 mm to 0.43 mm. The range of the mesh holes 310 is an optimum range that allows the smoothest discharge of the gas (g) while blocking the movement of the spark particles (p).

Thus, even if a thermal runaway phenomenon occurs in any one of the cell assemblies A accommodated therein, resulting in the generation of high-temperature gases (g) and spark particles (p), the battery pack of the present disclosure can quickly discharge the high-temperature gases (g) to the outside, and can maximally suppress the spark particles (p) from contacting oxygen from the outside.

### (Second embodiment)

The battery pack of the present disclosure allows for a more variable positioning of the side beam 220 and the spark prevention member 300.

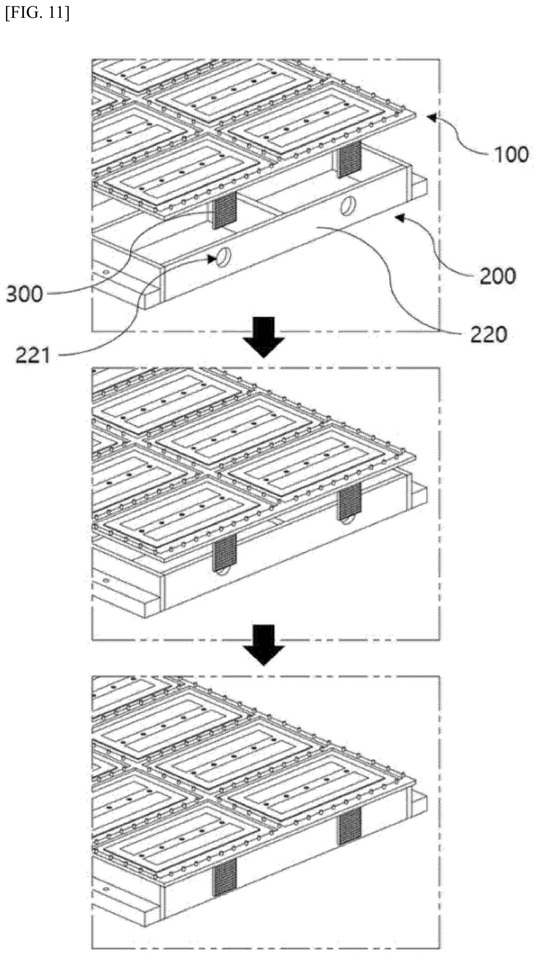

FIG. 10 illustrates the process of coupling the upper case 100 and the pack case 200 included in a battery pack according to a second embodiment of the present disclosure, and FIG. 11 illustrates a cross-sectional view of the pack case 200 where the discharge hole 221 is located and the upper case 100 where the spark prevention member 300 is located, in the battery pack of FIG. 10.

The spark prevention member 300 is provided at the lower end of the upper case 100 such that it is positioned on the outside of the side beam 220.

In this case, spark particles (p) that exit through the discharge hole 221 without any resistance are caught by the spark prevention member 300 located outside the discharge hole 221 and are prevented from escaping to the outside.

However, the gas (g) may be freely discharged through the gap Gp between the outer surface of the side beam 220 and the spark prevention member 300.

In the battery pack of the present disclosure according to the second embodiment, as in the first embodiment, the size of the substance that can pass through is limited by the size of the mesh holes 310, the mesh holes 310 having an average diameter (d) of 0.1 mm to 0.43 mm. In this case, if the average diameter (d) of the mesh holes 310 is less than 0.1 mm, the discharge of the gas (g) is not as smooth as desired, and there is a risk of an explosion due to an increase in the internal pressure of the battery pack. Furthermore, if the average diameter (d) of the mesh holes 310 is greater than 0.43 mm, there is a risk of spark particles (p) passing through.

More preferably, the mesh holes 310 have an average diameter (d) of 0.35 mm to 0.43 mm.

### (Third Embodiment)

The battery pack of the present disclosure may have an insertion groove 222 formed in the side beam 220 into which the spark prevention member 300 may be inserted.

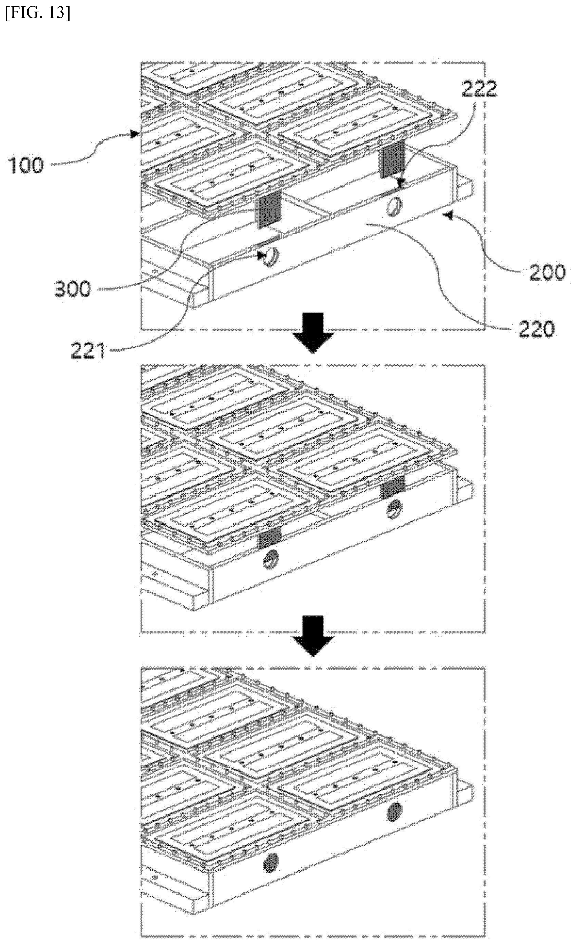

FIG. 12 illustrates the process of coupling the upper case 100 and the pack case 200 included in a battery pack according to a third embodiment of the present disclosure, and FIG. 13 illustrates a cross-sectional view of the pack case 200 where the discharge hole 221 is located and the upper case 100 where the spark prevention member 300 is located, in the battery pack of FIG. 12.

Referring to FIGS. 12 and 13, the side beam 220 includes an insertion groove 222 that is open to the upper part for insertion of the spark prevention member 300.

The upper case 100 is coupled with the pack case 200 by allowing the spark prevention member 300 to be inserted into the insertion groove 222. In this case, the spark prevention member 300 is preferably disposed so that it does not touch the side beam 220 in which the insertion groove 222 is formed.

The insertion groove 222 is formed corresponding to the position in which the discharge hole 221 is formed to intersect the discharge hole 221.

Thus, the spark particles (p) passing through the discharge hole 221 may be restricted in their movement by the spark prevention member 300 inserted in the insertion groove 222.

However, in the case of the gas (g), it can be freely discharged to the outside through the gap Gp between the insertion groove 222 and the spark prevention member 300, as well as through the mesh hole 310 of the spark prevention member 300.

In the battery pack of the present disclosure according to the third embodiment, as in the first embodiment, the size of the substance that can pass through is limited by the size of the mesh holes 310, wherein the mesh holes 310 have an average diameter (d) of 0.1 mm to 0.43 mm. In this case, if the average diameter (d) of the mesh holes 310 is less than 0.1 mm, the discharge of the gas (g) is not as smooth as desired, and there is a risk of an explosion due to an increase in the internal pressure of the battery pack. Furthermore, if the average diameter (d) of the mesh holes 310 is greater than 0.43 mm, there is a risk of spark particles (p) passing through.

More preferably, the mesh holes 310 have an average diameter (d) of 0.35 mm to 0.43 mm.

### (Fourth embodiment)

The battery pack of the present disclosure may have a double-designed spark prevention member 300 in one discharge hole 221.

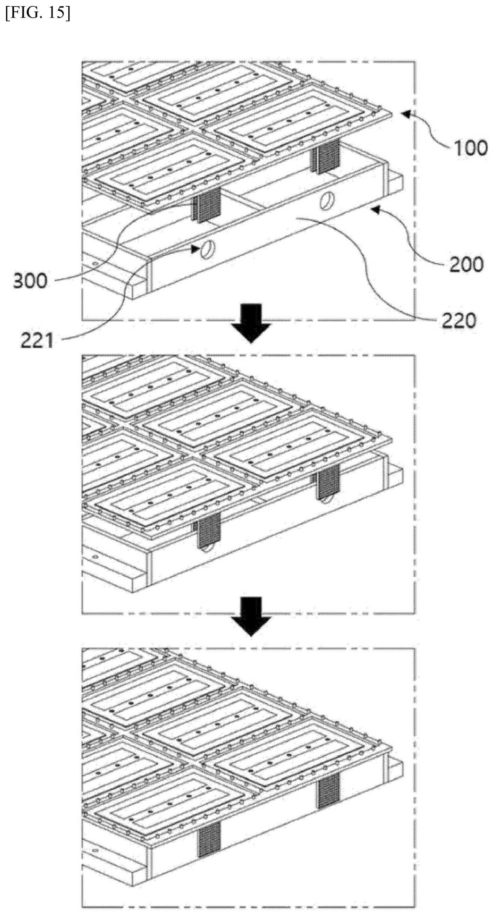

FIG. 14 illustrates the process of coupling the upper case 100 and pack case 200 included in a battery pack according to a fourth embodiment of the present disclosure, and FIG. 15 illustrates a cross-sectional view of the pack case 200 where the discharge hole 221 is located and the upper case 100 where the spark prevention member 300 is located, in the battery pack of FIG. 14.

The one discharge hole 221 is countered by a pair of spark prevention members 300, as shown in FIGS. 14 and 15.

A pair of the paired spark prevention members 300 are spaced apart at a predetermined distance and are provided at the lower end of the upper case 100 to face each other.

Specifically, one of the pair of spark prevention members 300 is located on the inside of the side beam 220 and the other is located on the outside of the side beam 220. Preferably, each of the pair of spark prevention members 300 is disposed so as not to contact the side beam 220.

Thus, spark particles (p) generated inside the battery pack are restricted from traveling to the outside by the pair of double-designed spark prevention members 300.

Specifically, the gases (g) generated inside the battery pack may be restricted in their movement primarily by a spark prevention member 300 located on the inside of the pack case 200 and secondarily by a spark prevention member 300 located on the outside of the pack case 200.

However, the gas (g) generated inside the battery pack may be discharged to the outside through the mesh holes 310 formed in each of the spark prevention members 300, and may be secondarily discharged to the outside through the gap Gp between each of the spark prevention members 300 and the side beam 220.

In the battery pack of the present disclosure according to the fourth embodiment, as in the first embodiment, the size of the substance that can pass through is limited by the size of the mesh holes 310, the mesh holes 310 having an average diameter (d) of 0.1 mm to 0.43 mm. In this case, if the average diameter (d) of the mesh holes 310 is less than 0.1 mm, the discharge of the gas (g) is not as smooth as desired, and there is a risk of an explosion due to an increase in the internal pressure of the battery pack. Furthermore, if the average diameter (d) of the mesh holes 310 is greater than 0.43 mm, there is a risk of spark particles (p) passing through.

More preferably, the mesh holes 310 have an average diameter (d) of 0.35 mm to 0.43 mm.

Hereinafter, the disclosure will be described in more detail with reference to specific examples. However, these examples are intended to illustrate the disclosure and the scope of the disclosure is not limited by them.

### Preparation of Cell Ignition Equipment (E)

FIG. 16 illustrates a cell ignition equipment E prepared to intentionally generate thermal runaway in a cell C to produce a spark, and FIG. 17 illustrates a cross-sectional view of the cell ignition equipment E of FIG. 16.

According to the cell ignition equipment E, it is in the form of a box perforated on both sides, inside which is located the cell C to be used in the experiment and a heating pad Ph for igniting the cell C. On both sides of the cell C, a separation wall W containing a spark prevention member 300 is installed, as shown in FIG. 16. Thus, the cell C to be used in the experiment and the heating pad Ph are isolated from contact from the outside by the separation wall W, except for the spark prevention member 300.

Furthermore, in the cell ignition equipment E, a tempered glass Gs is installed on the upper part where the separation wall W is coupled to check the occurrence and movement of sparks.

The cell ignition equipment E simulates a battery pack environment, wherein the separation wall W corresponds to the side beam 220 of a battery pack.

The cell ignition equipment E may be divided into an outlet space, which is in communication with the outside, and an inlet space, which is the space between the pair of separation wall W, as shown in FIG. 17.

According to FIG. 17, a pair of pouch-type cells C is stacked side by side in the inlet space, and a heating pad Ph capable of heating to a temperature of 200°C or more is interposed between the cells C. Here, the cells C include an electrode assembly comprising 40 stacked unit cells C for a stack of separator-negative electrode-separator-positive electrode-separator.

The upper part of the stacked cell C is supported by an upper jig G1 as shown in FIG. 17, and the lower part of the stacked cell C is supported by a lower jig G2. Although not shown, the upper jig G1 and the lower jig G2 are bolted to each other, and the cell C is pressurized by tightening the bolts.

### Example 1

In the cell ignition equipment E of FIG. 16, a spark prevention member 300 having a mesh hole 310 size of 0.43 mm was applied.

### Example 2

In the cell ignition equipment E of FIG. 16, the spark prevention member 300 having a mesh hole 310 size of 0.41 mm was applied.

### Example 3

In the cell ignition equipment E of FIG. 16, a spark prevention member 300 having a mesh hole 310 size of 0.35 mm was applied.

### Comparative Example 1

In the cell ignition equipment E of FIG. 16, a spark prevention member 300 having a mesh hole 310 size of 0.6 mm was applied.

### Comparative Example 2

In the cell ignition equipment E of FIG. 16, a spark prevention member 300 having a mesh hole 310 size of 0.5 mm was applied.

### Comparative Example 3

In the cell ignition equipment E of FIG. 16, a spark prevention member 300 having a mesh hole 310 size of 0.48 mm was applied.

### Experimental Example

The heating pad Ph of each cell ignition equipment E prepared in Examples 1 to 3, Comparative Examples 1 to 3 was activated and the temperature of the heating pad Ph was raised to the point where sparks were generated in the cells C accommodated therein. Then, each cell C was ignited until the spark was observed externally through the mesh hole 310 of each spark prevention member 300. Furthermore, the time from the time when the spark was generated in each cell C contained in the inlet space to the time when the spark particles (p) were ejected to the outlet space of the equipment was measured, and is shown in Table 1 below.

**[Table 1]**

| | Spark ejection time (sec) |
|---|---|
| Example 1 | Unobservable |
| Example 2 | Unobservable |
| Example 3 | Unobservable |
| Comparative Example 1 | 2 |
| Comparative Example 2 | 4 |
| Comparative Example 3 | 17 |

FIG. 18 is a photograph of the area in which the spark prevention member 300 is located when a spark is generated in the cell C of the cell ignition equipment E of Example 1. According to FIG. 18, it can be seen that the spark generated in the inlet space is not discharged to the outlet space by the spark prevention member 300.

The same characteristics were observed in Example 2 and Example 3.

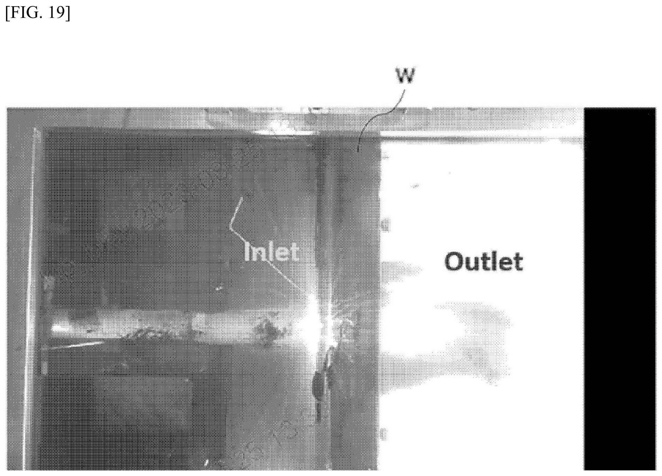

However, in the case of Comparative Example 1, the spark particles (p) were released to the outside through the mesh holes 310 within a relatively short period of time after the spark occurred in cell C. FIG. 19 is a photograph of the area in which the spark prevention member 300 is located when a spark is generated in the cell C of the cell ignition equipment E of Comparative Example 1.

Referring to FIG. 19, a spark generated in the inlet space passes through the separation wall W and is observed at the outlet space.

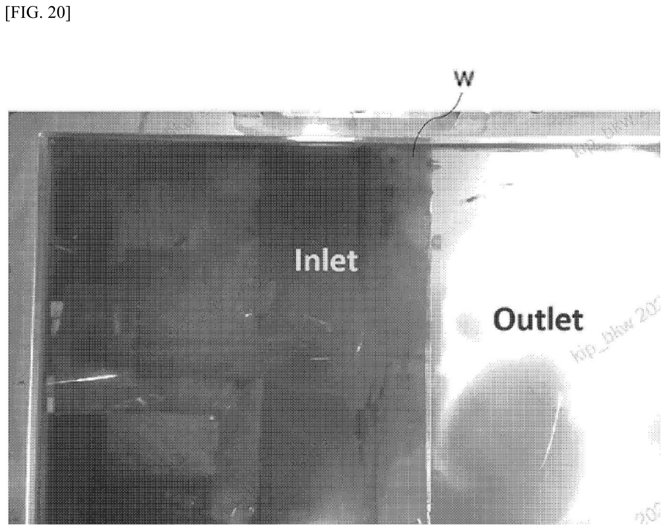

In the case of Comparative Example 2, it took a relatively longer time for the spark particles (p) to be released compared to Comparative Example 1, but it was possible to observe a spark in the outlet space, and furthermore, an explosion caused by the spark was temporarily observed. FIG. 20 is a photograph of an area in which the spark prevention member 300 is located when a spark is generated in the cell C of the cell ignition equipment E of Comparative Example 2, and according to FIG. 20, a flame caused by an explosion is observed in the outlet space.

In the case of Comparative Example 3, it took the longest time for the spark to be detected in the outlet space, suggesting some effectiveness in delaying the explosion. However, Comparative Example 3 also produced a large flame after a period of time, as did Comparative Examples 1 and 2.

The present disclosure has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may be substituted for them at the time of filing the present application.

### [Description of Reference Numerals]

10: (PRIOR ART) BATTERY PACK
20: (PRIOR ART) UPPER CASE
30: (PRIOR ART) PACK CASE
A': (PRIOR ART) CELL ASSEMBLY
C': (PRIOR ART) CELL
100: UPPER CASE
200: PACK CASE
210: BASE PLATE
220: SIDE BEAM
221: DISCHARGE HOLE
222: INSERTION GROOVE
230: CENTER BEAM
240: CROSS BEAM
300: SPARK PREVENTION MEMBER
310: MESH HOLE
A: CELL ASSEMBLY
C: CELL
E: CELL IGNITION EQUIPMENT
G1: UPPER JIG
G2: LOWER JIG
Gs: TEMPERED GLASS
Ph: HEATING PAD
W: SEPARATION WALL
g: GAS (MOVEMENT)
p: SPARK PARTICLES (MOVEMENT)
Gp: GAP (SPACING)
d: MESH HOLE (AVERAGE) DIAMETER

## Claims

1. A battery pack accommodating a plurality of cell assemblies, comprising:
a pack case in which a cell assembly is seated;
an upper case coupled to the pack case to cover an upper part of a cell assembly seated inside the pack case; and
at least one spark prevention member comprising circular mesh holes and provided at the lower end of the upper case, wherein
the pack case includes at least one discharge hole on a side part communicating with the interior space,
the spark prevention member is provided at a location corresponding to the discharge hole of the pack case, and
the mesh holes have an average diameter of 0.1 mm to 0.43 mm.

2. The battery pack of claim 1, wherein
the spark prevention member has a mesh structure.

3. The battery pack of claim 1, wherein
the mesh holes have an average diameter of 0.35 mm to 0.43 mm.

4. The battery pack of claim 1, wherein
the spark prevention member is erected perpendicular to the upper case such that the mesh holes communicate with the discharge holes of the pack case.

5. The battery pack of claim 1, wherein
the pack case comprises:
a base plate that supports the lower part of the cell assembly;
a center beam crossing a center part of the base plate and coupled to the base plate so as to compartmentalize the interior space of the pack case into two; and
a side beam coupled to a rim of the base plate to support a side part of the cell assembly.

6. The battery pack of claim 5, wherein
the pack case includes two discharge holes, wherein
each of the discharge holes is formed in the side beam to communicate with a respective pack case interior space compartmentalized by the center beam.

7. The battery pack of claim 5, wherein
the spark prevention member is located on at least one of the inside and outside of the side beam.

8. The battery pack of claim 5, wherein
the one discharge hole is correspondingly provided with a pair of spark prevention members, wherein
a pair of the paired spark prevention members is spaced apart at a predetermined distance and is provided at the lower end of the upper case to face each other.

9. The battery pack of claim 8, wherein
one of the pair of spark prevention members is located on the inside of the side beam and the other is located on the outside of the side beam.

10. The battery pack of claim 5, wherein
the side beam includes an insertion groove open to the upper part for insertion of the spark prevention member,
the insertion groove is formed corresponding to a position in which the discharge hole is formed to intersect the discharge hole, wherein
the upper case is coupled to the pack case by allowing the spark prevention member to be inserted into the insertion groove.

11. The battery pack of claim 5, wherein
the spark prevention member is provided at the lower end of the upper case at a position spaced apart horizontally at a predetermined distance from the side beam.

12. The battery pack of claim 11, wherein
the spark prevention member is provided to be spaced apart at 0.1 mm to 1 mm from the side beam.

13. The battery pack of claim 1, wherein
the spark prevention member comprises an electrically insulating material.

14. The battery pack of claim 1, wherein
the spark prevention member comprises a flame-resistant material.

15. The battery pack of claim 1, wherein
the spark prevention member has an area greater than the area of the discharge hole.
